# EUROPEAN PATENT SPECIFICATION

(11) **EP 0 883 995 B1**
(45) Date of publication and mention of the grant of the patent: **10.04.2002**
(21) Application number: 98500120.5
(22) Date of filing: 14.05.1998
(51) Int. Cl.: A22B 5/16

(54) **Animal skinning machine**
Tierhäutmaschine
Machine pour écorcher les animaux

(30) Priority: 14.05.1997 ES 9701034
(43) Date of publication of application: 16.12.1998
(73) Proprietor: Soldevilla Bardaji, Juan José, 22533 Belver de Cinca (Huesca) (ES)
(72) Inventor: Soldevilla Bardaji, Juan José, 22533 Belver de Cinca (Huesca) (ES)
(74) Representative: Gollob, Ulrik, Dr.

(56) References cited:
- EP-A- 0 608 189
- WO-A-81/00040
- US-A- 3 835 502
- US-A- 4 653 149
- PATENT ABSTRACTS OF JAPAN vol. 096, no. 008, 30 August 1996 & JP 08 089160 A (SHIYOKUNIKU SEISAN GIJUTSU KENKYU KUMIAI), 9 April 1996
- DATABASE WPI Section Ch, Week 8835 Derwent Publications Ltd., London, GB; Class D12, AN 88-248667 XP002073599 & SU 1 375 217 A (KOLOMIETS M A)
- DATABASE WPI Section Ch, Week 9323 Derwent Publications Ltd., London, GB; Class D12, AN 93-187475 XP002073600 & SU 1 741 709 A (MOGIL TECHN INST)

## Description

The present invention relates, to a skinning machine used for the skinning of cattle that produce meat for human consumption, specially that of sheep and goat according to the preamble of claim 1.

At present, one of most common practices is the manual skinning of this type of cattle, while in large slaughter houses a known device is used to help in the skinning of animals, said device consisting of a arm shaped bar that is introduced between the lumbar region and the skin, which has been partially stripped out, swinging up and down while the said device horizontal axis also swings continuously making it possible the complete skinning of cattle.

The manual skinning means a high labour cost, and also presents some inconveniences such as the manual handling of the dressed bodies for it is obvious that the skinning operators touch the cattle wool or hair and then the meat very frequently, transmits unwanted tastes and smells and, possibly, human deseases.

The device provided with an arm for final skinning, presents the inconvenient of requiring an important previous labour operation for each animal, as it is necessary to cut off the legs and strip off the said legs skin, and make a cavity between in lumbar region between the skin and the body so as to leave sufficient space to introduce the operation arm, this operation implying ,in one hand an undesirable handling and, in the other hand, frequent impacts on the meat, what may affect to the meat quality and appearance. It must also be emphasised, as a serious inconvenient in this skinning method, the excessive times spent as well as the high costs involved in the mechanical devices required.

Further, JP-A-08089160 discloses an apparatus for peeling skin of a butchered body.

It is the technical problem of the present invention to provide an improved skinning machine, avoiding the drawbacks of the prior art. This problem is solved by a skinning machine having the features of claim 1.

Said machine consists of a square shaped metal frame, provided with front struts, the traction trolley running on a series of rails by means of multiple wheels, with a traction cylinder or an electrical winch provided to have an upwards displacement. Said traction trolley consists of at least two cylinders, which pick the front legs skin ends. Two profiles are provided near the bottom front end of the metal frame, positioned in a triangular arrangement, with a support placed on the front common point, this support reinforcing the connection to frame by means of a longitudinal profile, while a cylinder projects out of the said support base, and said cylinder stem incorporates on one end two adjacent hooks designed to hold the stumps of previously skinned front legs, whereas the animal body will be usually hanging by a leg inserted into one of the guiding rail hooks.

Once the marking or scoring of the body skin has been made, the front legs skin will be stripped off, and the leg skin ends will be hooked onto the traction trolley, as it has been described hereinbefore, while the previously cleaned stumps are inserted onto the front cylinder stem hooks, using the said cylinder and the guiding rail hook to keep the body straight, following with an upwards displacement of the traction trolley with the result of a complete skinning of the body including the head. Once the skinning operation is completed, the trolley, by means of the upper longitudinal profile, meets the guide plate arms, this operation producing the pivoting of said guide plate towards the inside of the metal frame, and at that moment, by means of adequate limiting switches, the picking stems move the skin upwards and drop same onto the guide plate placing the skin inside a container positioned at the bottom within the metal frame. Once this operation has been completed, the pressure on the traction cylinder is released by means of a control device, and therefore the said traction trolley returns to the initial position, making it possible to start a new cycle.

The present cattle skinning machine presents an important advantage related to health conditions since the skinning operators do not get in contact with the animal body. When carrying out a manual skinning, the operator gets in contact with the animal wool or hair as well as with the meat, so said skinning machine object of the present invention avoids unwanted contacts and transmission of contaminant agents from operator or from animal wool or hair. Furthermore, the meat does not absorb undesired smells produced during manual skinning.

Another advantage with respect to machines provided with an arm introduced into the lumbar region is the fact that the dressed body does not get in contact with any foreign element, i.e., it is not rubbed or impacted, thus avoiding the presence of unwanted soft areas on the meat

Another advantage of said machine with respect to the means known in the prior art, consists of that said machine object of the invention obtains complete perfect skins, whereas the operation times are considerably reduced, for with the known skinning means the operation consists of skinning the four legs and partially skinning of the animal body including the incision in the lumbar region, with the machine object of present invention it is sufficient to initiate the skinning of the front legs, completing the skinning operation including the animal head, thus obtaining a better output.

As a conclusion the most important advantages are the sustantial time reduction for the skinning operations, as well as the cost reduction on equipment, since the cattle skinning machine object of the present invention has a solid and simple construction with respect to the sophisticated and expensive known systems.

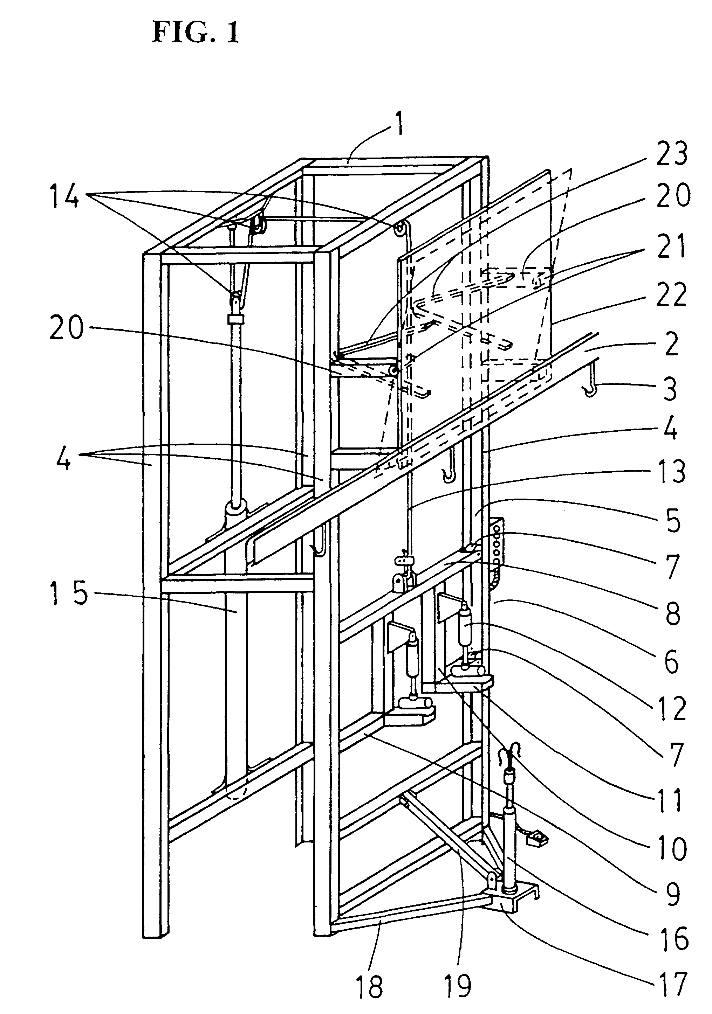

To better understand the object of the present invention a practical preferential embodiment of said machine is shown on Figure 1.

This Figure 1 shows a perspective view of the cattle skinning machine.

The cattle skinning machine consists, as shown in Figure 1, of a frame (1) positioned facing a guiding rail (2) used as a support of hooks (3), intended to hold the slaughtered animals by one of their back legs. Said frame (1) presents a square shape and is provided with a profile at each corner, the front profiles (4) preferably being of U shape, with openings (5) arranged as support for the displacement, by means of wheel assemblies (7), for the traction trolley (6).

The said traction trolley (6) consists of an upper beam (8) with ends provided with wheel assemblies (7), while the bottom side is provided with two bases (9) also with rolling lines (7) in their ends. Said bases (9) are connected to the upper beam (8) by means of two L shape profiles (10), with support parts (11) projecting out, horizontally and parallel, from the point where said L shape profiles (10) and bases (9) meet, said support parts consisting of a square shape part with concave shaped upper end. The L shape profiles (10) are linked to cylinders (12), which, by being in a perpendicular position, make the cylinders stems face the support parts (11), being limited by the said cylinders stems (12), a variable length cylindrical profile, arranged in parallel with the said support parts (11).

A cable or rope (13) is provided linked to the upper side of the traction trolley (6), said cable or rope, and with the help of at least three pulleys (14) placed on frame (1) upper end, connected to stem end of a traction cylinder (15), positioned on frame (1) back side.

A stretching cylinder (16) is separately positioned, perpendicular to bottom end of frame (1), being anchored to said frame (1) by means of a support (17) and two profiles (18), which are connected to the front profiles (4). A profile (19) is mounted to assure that the cylinder (16) keeps perpendicular.

Two supports (20) are located horizontally, close to frame (1) upper end and on the frame front side, parallel to each other, said supports being made of any shape of standard profiles, with a common rotation axis (21). A guiding plate (22) is connected, by means of said rotation axis, to said supports (20), obtaining the pivoting of said plate by means of arms (23) anchored on their inside side and helped by the pressure exerted by the upper beam (8) on said arms (23) on the upwards displacement. The said guiding plate (22) is made with square shape y laminated section.

The features of the guiding rail (2) are omitted for not being part of the invention, and, as it has been described hereinbefore, said skinning machine will be positioned facing the said guiding rail.

## Claims

1. Cattle skinning machine, of the type used for skinning the animals used for human consumption, preferably sheep and goat, featured in that said machine comprises a square shape frame (1) mainly defined by four struts, with the two front struts (4), preferably having U-shape, positioned against each other, allowing for the housing and sliding of the traction trolley (6) wheel assemblies (7), with said traction trolley (6) holding and stripping off the animal skin by means of an upwards displacement obtained by means of a set of pulleys (14) with cable or rope and a traction cylinder (15) located at the machine back side,
**characterized in that**
a double stroke cylinder (16) is located on the bottom side of the machine front face, which projects out, in such a way that it is fixed in vertical central position, and is provided with two adjacent hooks mounted on said cylinder stem end, the connection of said cylinder (16) with the frame (1) be obtained by means of three profiles (18, 18, 19) meeting at the support part (17) to which said cylinder (16) is anchored.

2. Cattle skinning machine according to claim 1, **characterized in that** traction trolley (6) consists of an upper beam (8), with wheels (7) mounted on said upper beam ends, while said traction trolley (6) bottom side comprises two bases (9) with wheels (7) mounted on bases ends, said bases (9) being connected to said upper beam (8) by means of two struts (10), being the point of connection of said bases (9) and struts (10) where the support parts (11) are horizontally, and parallel to each other, located, said support parts(11) having a half square section with a concave upper side, and provided with a pressure cylinder (12) facing each of said faces, with each cylinder (12) comprising a stem placed in horizontal position aligned with its associated support part.

3. Cattle skinning machine according to one of the preceding claims, **characterized in that** a laminated shape, square section guiding plate (22) is located at the machine upper end, with said guiding plate (22) being isolated from machine frame (1) by means of two standard shape profiles (20) horizontally positioned, provided on their ends with pivoting connections (21) to guiding plate, whereas two arms (23) are provided at inside face of the guiding plate (22), fixed to said guiding plate by means of a V-shape strip.

## Patentansprüche

1. Viehabhäutemschine, von der Art, die zum Abhäuten von Vieh, welches für den menschlichen Verzehr bestimmt ist, vorzugsweise Schafe und Ziegen, verwendet wird, die dadurch ausgezeichnet ist, daß die Maschine einen quadratisch geformten Rahmen (1) hat, der hauptsächlich aus vier Streben besteht (4), die vorzugsweise eine U-Form aufweisen und gegenüberliegend angeordnet sind, um den Rädern (7) des Zugwagens (6) die Aufnahme und das Gleiten zu ermöglichen, wobei mit dem Zugwagen (6) durch eine Verschiebung nach oben, die durch eine Anordnung von Umlenkrollen (14) mit Kabeln oder Seilen und einen Zugzylinder (15), der an der Maschinenrückseite angeordnet ist, erreicht wird, das Tierfell gehalten und abgezogen wird,
**dadurch gekennzeichnet, daß**
ein Doppelhubzylinder (16), an der Bodenseite der Maschinenvorderseite so angebracht ist, der so herausragt, daß er in einer senkrechten zentralen Stellung fixiert ist, und der an seinem Ende mit zwei angrenzenden Haken ausgestattet ist, die an dem Zylinderstielende befestigt sind, wobei eine Verbindung des Zylinders (16) mit dem Rahmen (1) durch drei Profile (18, 18, 19) erreicht wird, die sich an dem Unterstützungsteil (17) treffen, an welchem der Zylinder (16) verankert ist.

2. Viehabhäutemschine, nach Anspruch 1,
**dadurch gekennzeichnet, daß**
der Zugwagen (6) aus einem oberen Träger (8), auf dessen oberen Enden Räder montiert sind, besteht, während die Unterseite des Zugwagens (6) zwei Grundflächen (9) mit Rädern (7) aufnimmt, die auf den Enden der Grundflächen montiert sind, und wobei die Grundflächen (9) mit dem oberen Träger (8) durch zwei Streben (10) verbunden sind, die den Verbindungspunkt der Grundflächen (9) und der Streben (10) an dem die Unterstützungsteile (11) waagrecht und parallel zueinander angebracht sind bilden, wobei die Unterstützungsteile (11) einen halbquadratischen Querschnitt mit einer gewölbten oberen Seite aufweisen, und mit einem Druckzylinder (12) ausgestattet sind, der sich gegenüber jeder der Seiten befindet, wobei jeder Zylinder (12) einen Stiel beinhaltet, der entsprechend seinem verbundenem Unterstützungsteil in waagrechter Position ausgerichtet ist.

3. Viehabhäutemaschine nach einem der vorangegangenen Ansprüchen,
**dadurch gekennzeichnet, daß**
eine laminar geformte Führungsplatte (22) mit quadratischem Querschnitt am oberen Ende der Maschine angeordnet ist, wobei die Führungsplatte (22) vom Maschinenrahmen (1) durch zwei konventionell geformte Profile (20) getrennt ist, die horizontal angeordnet sind, und an ihren Enden mit drehbaren Verbindungen (21) zu einer Führungsplatte vorgesehen sind, wobei zwei Arme (23) an der Innenseite der Führungsplatte (22) vorgesehen sind, die an der Führungsplatte durch eine V-förmige Leiste befestigt sind.

## Revendications

1. Machine pour retirer la peau de bétail, du type utilisé pour retirer la peau du bétail destiné à être consommé par l'être humain , de préférence des moutons et des chèvres, conçue de manière à comprendre un cadre de forme carrée (1) défini essentiellement par quatre supports dont les deux supports frontaux (4) de préférence en forme de U , sont placés l'un contre l'autre et permettant d'abriter et de faire glisser les unités (7) de chariot de traction (6) ; ledit chariot de traction (6) maintenant et retirant la peau de l'animal au moyen d'un déplacement vers le haut obtenu au moyen d'un ensemble de poulies (14) au moyen d'un câble ou d'une corde et un vérin de traction (15) situé à l'arrière de la machine, **caractérisé en ce qu'**un double vérin de levage (16) est situé sur le côté du fond du côté frontal de la machine; ledit vérin faisant saillie de manière à être immobilisé dans une position centrale verticale , et lequel double vérin est pourvu de deux crochets adjacents montés sur l'extrémité de la tige du vérin ; la connection dudit vérin avec le cadre (1) étant obtenue au moyen de trois profilés (18, 18, 19) sur la partie du support (17) à laquelle est ancré le vérin (16).

2. Machine pour retirer la peau de bétail selon la revendication 1, **caractérisé en ce que** ledit chariot de traction (6) comprend une potence supérieure (8) avec des roues (7) montées sur les extrémités de ladite potence supérieure pendant que le côté du fond du chariot de traction (6) comprend deux bases (9) avec des roues (7) montées sur les extrémité des bases , lesdites bases étant connectées à ladite potence supérieure (8) au moyen de deux supports (10) et étant le point de connection pour lesdites bases (9) et supports (10) où les parties de support (11) sont situérs de façon horizontale et parallèle l'une par rapport à l'autre; lesdites parties de support (11) présentent la moitié d'un carré avec un côté supérieure concave et pourvues d'un vérin de pression (12) situé en face de chacun des deux côtés; chaque vérin (12) comprenant une tige placée en position horizontale et étant aligné avec ses parties de supports associées.

3. Machine à retirer la peau de bétail selon une des revendications précédentes, **caractérisé en ce qu'**une plaque (22) de guidage de section carrée et de forme laminée est située sur le côté supérieure de la machine; ladite plaque de guidage (22) étant isolée du cadre de la machine au moyen de deux profilés (20) de forme standard et positionés de façon horizontale et pourvus sur leurs extrémités de deux connections pivotantes (21) à ladite plaque , pendant que deux bras (23) sont pourvus sur le côté intérieur de la plaque de guidage (22) fixés à ladite plaque au moyen de deux bandes en forme de V.
